# EUROPÄISCHE PATENTSCHRIFT

(11) **EP 1 625 034 B1**
(45) Veröffentlichungstag und Bekanntmachung des Hinweises auf die Patenterteilung: **27.01.2010**
(21) Anmeldenummer: 04732570.9
(22) Anmeldetag: 13.05.2004
(51) Int. Cl.: B60J 5/04, E05B 65/20

(54) **KRAFTFAHRZEUG**
MOTOR VEHICLE
VEHICULE AUTOMOBILE

(30) Priorität: 16.05.2003 DE 10322122
(43) Veröffentlichungstag der Anmeldung: 15.02.2006
(73) Patentinhaber: Kiekert Aktiengesellschaft, 42579 Heiligenhaus (DE)
(72) Erfinder: MENKE, Johannes-Theodor, 42551 Velbert (DE)
(86) Internationale Anmeldenummer: PCT/DE2004/001001
(87) Internationale Veröffentlichungsnummer: WO 2004/103749

(56) Entgegenhaltungen:
- EP-A- 1 031 690
- DE-A- 19 942 360
- DE-A- 19 957 061
- US-A- 2 922 672
- PATENT ABSTRACTS OF JAPAN Bd. 2000, Nr. 13, 5. Februar 2001 (2001-02-05) -& JP 2000 280744 A (MAZDA MOTOR CORP), 10. Oktober 2000 (2000-10-10)

## Beschreibung

Die Erfindung betrifft ein Kraftfahrzeug mit zumindest einer Vordertür mit einem Vordertürverschluss und einer Schiebetür oder Pagodentür als Hintertür mit zumindest einem Hintertürverschluss. Pagodentür meint insbesondere eine über eine panthograph ähnliche Scharnieranordnung angelenkte Hintertür (vgl. DE 196 34 369 C1), die im Zuge des Öffnungsvorganges aufschwingt und im Wesentlichen parallel zur Fahrzeuglängsrichtung zurückziehbar ist (Schließvorgang erfolgt in umgekehrter Reihenfolge). Bei der Vordertür handelt es sich vorzugsweise um eine scharnierangelegte Tür, deren Schwenkachse im Wesentlichen senkrecht zur Fahrzeugfahrtrichtung verläuft.

Bekanntlich wird bei Kraftfahrzeugen, insbesondere Personenkraftwagen die Anbindung des Fahrzeugdaches an den Fahrzeugkörper in Fahrtrichtung von vorne nach hinten beidseitig mit als A-Säulen (Dachvorderseite), B-Säulen (Dachmitte) und C-Säulen (Dachhinterseite) bezeichneten Abstützungen vorgenommen. B-säulenfreie Kraftfahrzeuge sind demnach solche, bei denen das Fahrzeugdach im Bereich der Mitte nicht gesondert abgefangen wird. In diesem Zusammenhang sind insbesondere als Coupes und Cabrios ausgeführte Kraftfahrzeuge bekannt, die in der Regel lediglich zwei scharnierangelegte Vordertüren aufweisen. Man kennt aber auch derartige Kraftfahrzeuge und B-säulenfreie Limousinen mit Rundumsicht, die auch Hintertüren aufweisen. Bei derartigen Kraftfahrzeugen besteht die Möglichkeit, die Fahrzeugtüren mit separat pro Fahrzeugtür am Dachholm sowie an der Bodenleiste (Einstiegsleiste) angebrachten Schließgesperren auszurüsten (vgl. EP 1 050 645 A1). Bei dieser Ausgestaltung lässt sich eine in jeder Hinsicht zufriedenstellende Anbindung der Fahrzeugtüren in der Fahrzeugmitte, wo also die B-Säule fehlt nur mit erheblichem konstruktiven Aufwand erreichen, zumal insbesondere bei hohen Fahrzeug-Geschwindigkeiten in diesen Bereichen erhebliche (Wind-)Druckkräfte auftreten. Ferner ist die Verbindung der Fahrzeugtüren im Bereich der Fahrzeugmitte nur beschränkt stabil. Beim Zuschlagen der Vordertür bzw. Zuschlagen oder Einfahren der Hintertür treten erhebliche Federwirkungen und Nachfederungen auf, wodurch erhöhte Schließkräfte zum ordnungsgemäßen Schließen der Fahrzeugtüren erforderlich sind.

Darüber hinaus ist aus der US 2002/002 73 75 A1, von der die Erfindung ausgeht, ein Kraftfahrzeug bekannt mit zumindest einer Vordertür mit einem Vordertürverschluss und einer Schiebetür oder Pagodentür als Hintertür mit zumindest einem Hintertürverschluss, wobei der Vordertürverschluss unter Verzicht auf eine B-Säule zwischen Vordertür und Hintertür mit der Hintertür zusammenwirkt und der Hintertürverschluss mit dem Türrahmen für die Hintertür zusammenwirkt.

Auch die US 2,922,672 offenbart einen solchen Türverschluss.

Außerdem sind Kraftfahrzeugtürverschlüsse in verschiedenen Ausführungsformen bekannt. Insbesondere sind solche mit zumindest einer Drehfalle, einer Sperrklinke, einer Schlossmechanik mit einer Zuziehhilfe für die Drehfalle und einem Fahrzeugkarosserie-seitigen von der Drehfalle zu umgreifenden Schließbolzen bekannt. Die Zuziehhilfe dient dazu, die Drehfalle aus einer Vorraststellung oder Zwischenstellung in eine Hauptraststellung vorzugsweise elektromotorisch unterstützt zu überführen, um den Schließvorgang komfortabel und funktionssicher zu machen (vgl. DE 199 42 360 A1). Kraftfahrzeugtürverschlüsse, deren Türschloss mit einer solchen Zuziehhilfe ausgerüstet ist, werden auch als Servoschlösser bezeichnet.

Ferner kennt man Kraftfahrzeugtürverschlüsse, denen ein Servoschlosshalter mit einem vorzugsweise elektromotorisch verstellbaren Schließbolzen zugeordnet ist, welcher die Fahrzeugtür in eine Endschließstellung überführt (vgl. DE 199 55 883 A1, DE 199 57 061 A1). Bei dem Servoschlosshalter handelt es sich um eine Zuziehhilfe, um die Fahrzeugtür aus einer Vorschließstellung in eine Endschließstellung gegen den Widerstand von beispielsweise einer Türdichtung zu verlagern, aber auch um geräusch- und verschleißverursachende Relativbewegungen zwischen der Fahrzeugtür und ihrem Türrahmen zu vermeiden.

Im Gegensatz zu dem oben behandelten Servoschloß gemäß DE 199 42 360 A1 überführt ein so genanntes, Servoschlosshalter-Schloß gemäß der DE 199 55 883 A1 beziehungsweise der DE 199 57 061 A1 die Fahrzeugtür aus einer Vorschließstellung erst dann in eine Endschließstellung, wenn das Türschloss in seine Hauptraststellung eingefallen ist. Es sei an dieser Stelle nochmals festgehalten, dass der Zuziehvorgang der Fahrzeugtür bei einem als Servoschloss ausgebildeten Kraftfahrzeugtürverschluss aus der Vorraststellung der Drehfalle erfolgt und dagegen der Zuziehvorgang der Fahrzeugtür bei einem als Servoschlosshalter ausgebildeten Kraftfahrzeugtürverschluss aus der Hauptraststellung der Drehfalle erfolgt. Im Ergebnis wird die Fahrzeugtür durch die oben genannten Kraftfahrzeugtürverschlüsse in eine vollständig geschlossene Position (Schließposition) verbracht, die bei einem Servoschloss über die Begriffsdefinition Hauptraststellung und bei einem Servoschlosshalter der Begriffsdefinition Endschließ-stellung entspricht.

Der Erfindung liegt die Aufgabe zugrunde, ein Kraftfahrzeug der eingangs beschriebenen Ausführungsform zu schaffen, welches sich unter Verzicht auf eine B-Säule in verhältnismäßig einfacher und funktionsgerechter Weise durch eine stabile Türverbindung zwischen Vordertür und Hintertür sowie stabile Anbindung der Türen an die Karosserie bei geringen Schließkräften auszeichnet.

Zur Lösung dieser Aufgabe lehrt die Erfindung ein gattungsgemäßes Kraftfahrzeug, bei dem der Vordertürverschluss unter Verzicht auf eine B-Säule zwischen Vordertür und Hintertür mit der Hintertür zusammenwirkt und der Hintertürverschluss mit dem Türrahmen für die Hintertür zusammenwirkt, ferner der Vordertürverschluss als Servoschloss mit einer Zuziehhilfe für seine Drehfalle ausgebildet ist und der Hintertürverschluss einen Servoschlosshalter mit einem verstellbaren Schließbolzen aufweist oder umgekehrt. Umgekehrt meint im Rahmen der Erfindung, dass der Vordertürverschluss einen Servoschlosshalter aufweist und der Hintertürverschluss als Servoschloss ausgebildet ist. Die Erfindung geht von der Erkenntnis aus, dass sich durch die Kombination eines Servoschlosses mit einem Türschloss mit Servoschlosshalter einerseits größere Schließwege überbrücken lassen um Fahrzeugtüren aus ihrer Vorschließstellung in ihre Endschließstellung bzw. aus ihrer Vorraststellung in ihre Hauptraststellung zu überführen, andererseits höhere Widerstände überbrücken lassen, um ein geräuscharmes und verschleißarmes Türschließen zu erreichen. Denn unter Berücksichtigung der erfindungsgemäßen Türschlosskombination wird grundsätzlich eine stabilere Türverbindung zwischen Vordertür und Hintertür sowie eine stabilere Anbindung der Türen an die Karosserie unter Berücksichtigung geringerer Schließkräfte erreicht.

Diese durch die Erfindung erreichten Vorteile lassen sich dadurch noch optimieren, dass in einer besonders bevorzugten Ausgestaltungsvariante die Hintertür im C-Säulenbereich und im bodenseitigen Türrahmenbereich einen Hintertürverschluss mit einem Servoschlosshalter aufweist, wenn der Vordertürverschluss als Servoschloss ausgebildet ist. Es besteht aber auch die Möglichkeit, dass die Hintertür im C-Säulenbereich und im bodenseitigen Türrahmenbereich einen als Servoschloss ausgebildeten Hintertürverschluss aufweist, wenn der Vordertürverschluss einen Servoschlosshalter besitzt. Ferner besteht auch eine Kombinationsmöglichkeit dahingehend, dass einer der beiden Hintertürverschlüsse einen Servoschlosshalter aufweist und der andere Hintertürverschluss als Servoschloss ausgebildet ist. Stets ist eine Servoschließung verwirklicht. Servoschließung meint die Benutzung von an sich bekannten Kraftfahrzeugverschlüssen mit in der Regel elektromotorischer Zuziehung, durch welche die entsprechende Fahrzeugtür (oder Klappe) aus einer Vorschließstellung (Vorraststellung) in eine Endschließstellung (Hauptraststellung) entgegen dem Widerstand von beispielsweise einer Türdichtung verlagert wird.

Im Rahmen der bevorzugten Ausgestaltungsvariante muss sich zum Schließen der Vordertür die Hintertür zumindest in der Vorschließstellung befinden, da der Schlosshalter mit Schließbolzen oder -keil für die Vordertür nach bevorzugter Ausführungsform der Erfindung Bestandteil der Hintertür ist. Besonders die bevorzugte Stellung "Vorschließstellung" der Hintertür vor dem Schließen der Vordertür macht einen besonderen Vorteil der Erfindung deutlich. Denn die Vordertür mit dem darin angeordneten Servoschloss trifft auf die in der Vorschließstellung gefahrene Hintertür bevor diese in die Endschließstellung durch deren Servoschlosshalter gezogen wird. Das heißt es stehen zwei Zuziehhübe von jeweils ca. 6 bis 8 mm zur Verfügung. Anders ausgedrückt:

Die Vordertür wird frühzeitig durch die als Schiebetür mit geringerem Abstand zur Karosserie gelagerte (geringeres Drehmoment als scharnierangelenkte Vordertür) und folglich stabilere Hintertür gleichsam eingefangen und in eine ebenfalls stabile, zwangsgeführte Position verbracht. Durch die Kombination von zwei Schließsystemen mit Zuziehfunktion können die bei derartigen Kraftfahrzeugen erforderlichen hohen Schließkräfte erheblich vermindert werden. Auch kann eine signifikante Minderung der Schließgeräusche erzielt werden. Insoweit stellt die Anordnung der Hintertür in der Vorschließstellung vor dem Schließen der Vordertür eine besondere Ausführungsform der Erfindung dar. Insgesamt wird durch die formschlüssige Verbindung zwischen den Fahrzeugtüren über den Hintertür-seitigen Schließbolzen/- keil auch eine beim Fahrbetrieb stabile Verbindung in dem B-säulenfreien Bereich erzielt.

Nach einer Ausgestaltungsvariante kann nach Auftreffen der Vordertür (Servoschloss triff auf Hintertür-seitigen Schließbolzen) auf die bevorzugt noch vorstehende Hintertür der Servoantrieb des Vordertürverschlusses anfahren, wodurch die Drehfalle in die Hauptraststellung verbracht wird. Anschließend zieht der Servoantrieb des Hintertürverschlusses (Servoschlosshalter) die Hintertür samt Vordertür in die Schließposition.

Alternativ arbeitet nach dem Auftreffen der Vordertür auf die bevorzugt noch vorstehende Hintertür (Vorraststelllung der Drehfalle des Vordertürverschlusses) der Servoantrieb der Hintertürverschlüsse und zieht die Hintertür in die Schließposition (Endschließstellung) unter Mitnahme der Vordertür. Anschließend zieht das Servoschloss der Vordertür diese in ihre Schließposition. Es ist jedoch auch denkbar, dass die Servoantriebe beispielsweise synchron betrieben werden.

Bei sämtlichen Ausführungsformen wird über beispielsweise eine Sensorsteuerung angezeigt, wenn die Vordertür im Zuge einer Schließbewegung kommt (sich in Richtung der Kraftfahrzeugkarosserie bewegt). Die dann von der Vordertür betätigte Sensorsteuerung oder der gleichen sorgt für eine Aktivierung nicht nur des Vordertürverschlusses, sondern auch der Hintertürverschlüsse dahingehend, dass die Hintertür die Vordertür gleichsam auffängt und anzieht sowie zuzieht. Im Einzelnen kann das Türsystem vorzugsweise mit entsprechenden, beispielsweise optischen Erfassungselementen (Sensoren) ausgestattet sein, um z. B. sicherzustellen, dass die Hintertür vor dem Schließen der Vordertür auf jeden Fall in die bevorzugte Vorschließstellung zum "Einfangen" der Vordertür verfährt. Es ist vorgesehen, dass zumindest die Hintertür mit einem elektromotorischen Türantrieb ausgestattet ist, beispielsweise gemäß DE 198 03 709 C2. Auch kann die vorzugsweise scharnierangelegte Vordertür elektromotorisch angetrieben werden, beispielsweise gemäß DE 101 14 938 A1. Dabei können die jeweiligen Türantriebe mit dem Servoschloss bzw. den mit Servorschlosshaltern ausgerüsteten Türschlössern wie aus der DE 199 44 554 A1 bekannt über eine hier nicht näher behandelte Steuerung zusammenwirken, auch um grundsätzlich sicherzustellen, dass ein Öffnen der Hintertür vor dem Öffnen der Vordertür auf jeden Fall vermieden wird. - Im Zusammenhang mit der Erfindung können auch insbesondere an der über Scharniere verschwenkbaren Vordertür Einrichtungen (Sensoren) angeordnet sein, über die eine Kollision der Fahrzeugtür beim Öffnungsprozess mit zu der Fahrzeugtür benachbarten Gegenständen (z. B. benachbart parkendes Fahrzeug) durch unmittelbares Zurückfahren der Fahrzeugtür vermieden werden.

Im Rahmen der Erfindung wird bei dem Servoschloss der für den Servoantrieb erforderliche Bauraum regelmäßig in dem in der entsprechenden Kraftfahrzeugtür angeordneten Türschloss selbst geschaffen, während bei Türschlössern mit Servoschlosshaltern der zusätzliche Bauraum für den Servoantrieb außerhalb des eigentlichen Schlosskörpers, nämlich in dem Bereich der Schlosshalterbefestigung - bei der erfindungsgemäßen Ausführungsform an der C-Säule oder Einstiegsleiste der Pagoden- oder Schiebetür - verlagert wird. - Bei den gebräuchlichen Servoschlosshaltern handelt es sich um entweder im Wesentlichen linear verfahrbare Typen (DE 199 55 883 A1) oder rotatorisch verfahrbare Typen (DE 199 57 061 A1), wobei an der Pagoden- oder Schiebetür vorzugsweise lediglich einer dieser Servoschlosshaltertypen oder beide Servoschlosshaltertypen kombiniert eingesetzt werden können.

Im Folgenden wird die Erfindung anhand einer lediglich ein Ausführungsbeispiel darstellenden Zeichnung näher erläutert. Es zeigen:

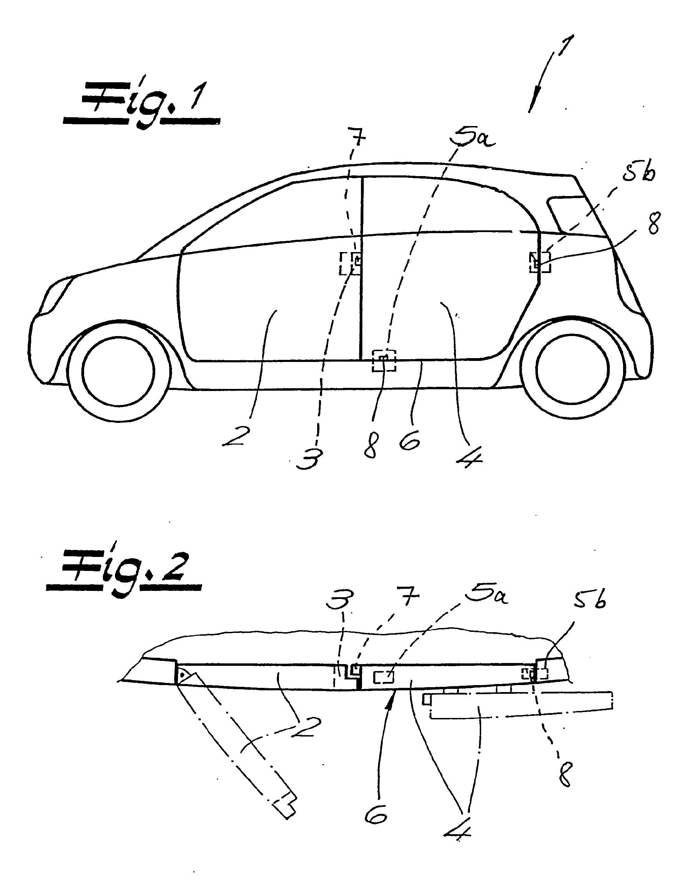

- **Fig. 1**: ein erfindungsgemäßes Kraftfahrzeug in schematischer Seitenansicht und
- **Fig. 2**: den Gegenstand nach Fig. 1 in schematischer Drauf- sicht auf den Türbereich mit andeutungsweise aufge- schwenkter Vordertür und hinterer Schiebetür.
- **Fig. 3**: ein Servoschlosshalter mit im Wesentlichen linear verfahrbaren Schließbolzen gemäß dem Stand der Technik nach 199 55 883 A1
- **Fig. 4**: ein Servoschlosshalter mit im Wesentlichen rotatorisch verfahrbaren Schließbolzen gemäß dem Stand der Technik nach DE 199 57 061 A1
- **Fig. 5**: ein elektromotorischer Antrieb für ein Servoschloss- halter mit im Wesentlichen rotatorisch verfahrbaren Schließbolzen gemäß dem Stand der Technik nach DE 199 57 061 A1
- **Fig. 6**: ein Servoschloss mit Antieb der Drehfalle gemäß dem Stand der Technik nach DE 199 42 630 A1

In den Figuren ist ein Kraftfahrzeug 1 mit einer scharnierangelenkten Vordertür 2 mit einem Vordertürverschluss 3 und einer Schiebetür als Hintertür 4 mit einem Hintertürverschluss 5a und/oder 5b gezeigt. Der Vordertürverschluss 3 wirkt unter Verzicht auf eine B-Säule zwischen Vordertür 2 und Hintertür 4 mit der Hintertür 4 zusammen, während der Hintertürverschluss 5a mit dem Türrahmen 6 für die Hintertür 4 zusammenwirkt. Danach befindet sich der Schlosshalter mit dem Schließbolzen 7 für den Vordertürverschluss 3 in bzw. an der Hintertür 4 und der Schlosshalter mit dem Schließbolzen für den Hintertürverschluss 5a im Türrahmen 6. Der Vordertürverschluss 3 ist als Servoschloss mit einer Zuziehhilfe für seine Drehfalle ausgebildet. Nach dem Ausführungsbeispiel weist die Hintertür 4 im C-Säulenbereich und im bodenseitigen Türrahmenbereich jeweils einen Hintertürverschluss 5a und 5b mit einem Servoschlosshalter mit einem verstellbaren Schließbolzen auf. Im Zuge einer Schließbewegung der Vordertür 2 holt die Hintertür 4 die Vordertür 2 gleichsam ab und zieht über die Servoschlosshalter gegen Die Kraft der Türdichtung an, so dass eine stabile Türverbindung erreicht und nur verhältnismäßig geringe Schließkräfte benötigt werden.

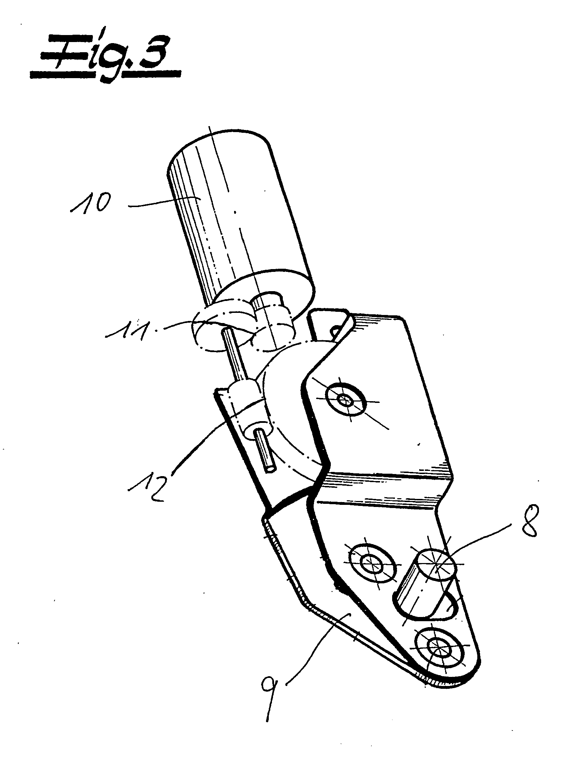

In der Figur 3 wird der aus dem Stand der Technik gemäß DE 199 55 883 A1 bekannte Servoschlosshalter mit einem im wesentlichen linear verfahrbaren Schließbolzen 8 aufgeführt. Der Schließbolzen 8 ist dabei auf einer im wesentlichen plattenförmigen Schwinge 9 angeordnet, welche über einen Elektromotor 10 und zwischengeschalteten Getrieben 11, 12 zum Zwecke des Verfahrens des Schließbolzen 8 im Sinne der Verlagerung der Fahrzeugtür von der Vorschließstellung in die Endschließstellung.

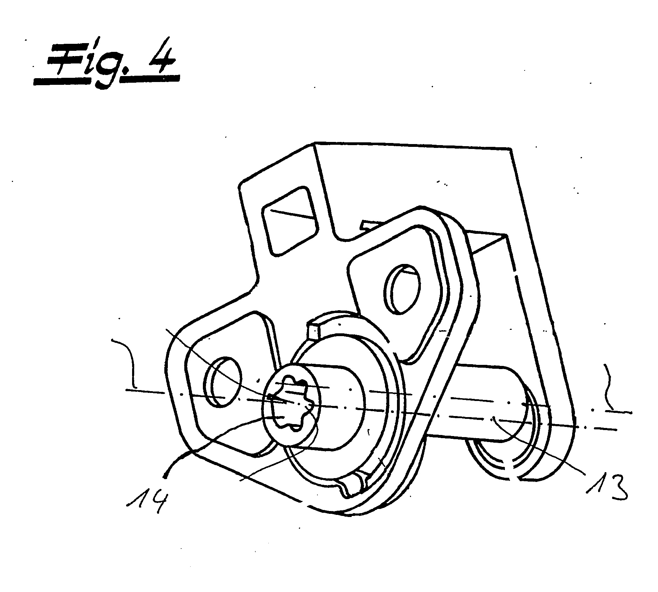

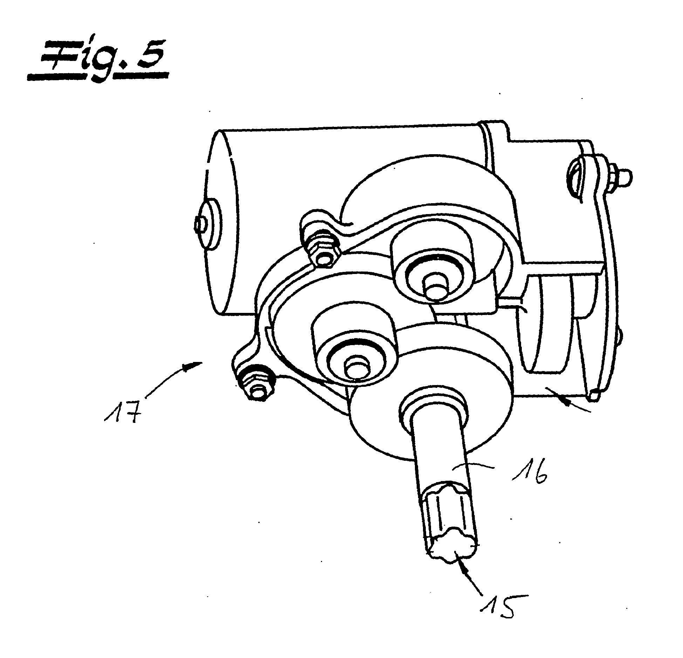

In den Figuren 4 und 5 wird der aus dem Stand der Technik gemäß DE 199 57 061 A1 bekannte Servoschlosshalter mit im wesentlichen um ca. 190° rotatorisch verfahrbarem Schließbolzen 13 aufgeführt. Man erkennt in Figur 4, dass der Schließbolzen 13 an seinem einen Ende eine Zapfenaufnahme 14 aufweist in welche gemäß Figur 5 ein Zapfen 15 einer Antriebswelle 16 eines elektromotorischen Antriebes 17 eingreift. Der Schließbolzen 13 ist gegenüber der Antriebswelle 16 exzentrisch angeordnet, so dass eine über die Antriebswelle 16 eingeleitete Drehbewegung eine Verlagerung des Schließbolzen verursacht, mit der Folge dass ein mit diesem Schließbolzen zusammenwirkendes, in Hauptraststellung befindliches Türschloss und damit auch die Fahrzeugtür in eine Schließposition überführt werden kann.

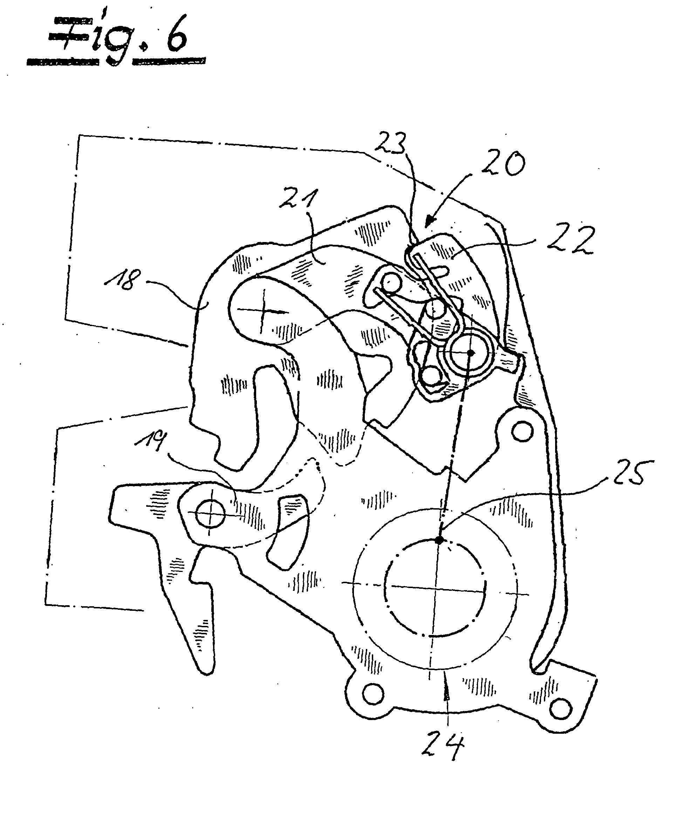

In der Figur 6 ist ein Servoschloß mit einer Zuziehhilfe für die Drehfalle gemäß dem Stand der Technik nach DE 199 42 360 A1 dargestellt welches eine Drehfalle 18, eine mit der Drehfalle 18 zusammenwirkenden Sperrklinke 19 und eine Schloßmechanik mit einer elektromotorischen Zuziehhilfe 20 für die Drehfalle 18 aufweist. Die Zuziehhilfe 20 besitzt eine schwenkbar gelagerte Schwinge 21 mit einer auf der Schwinge 21 schwenkbar gelagerten Zuziehklinke 22. Die Zuziehklinke 22 fällt zum Überführen der Drehfalle 18 aus die Vorraststellung in die Hauptraststellung gegen eine Angriffsfläche 23 an der Drehfalle 18 ein und überführt diese bei eingeschaltetem elektromotorischen Antrieb 24 über einen Kurbeltrieb 25 in die Hauptraststellung.

## Patentansprüche

1. Kraftfahrzeug mit zumindest einer Vordertür (2) mit einem Vordertürverschluss (3) und einer Schiebetür oder Pagodentür als Hintertür (4) mit zumindest einem Hintertürverschluss (5), wobei der Vordertürverschluss (3) unter Verzicht auf eine B-Säule zwischen Vordertür (2) und Hintertür (4) mit der Hintertür (4) zusammenwirkt und der Hintertürverschluss (5a, 5b) mit dem Türrahmen (6) für die Hintertür (4) zusammenwirkt, **dadurch gekennzeichnet, dass** der Vordertürverschluss (3) als Servoschloss mit einer Zuziehhilfe für seine Drehfalle ausgebildet ist und der Hintertürverschluss (5a, 5b) einen Servoschlosshalter mit einem verstellbaren Schließbolzen (8) aufweist oder umgekehrt.

2. Kraftfahrzeug nach Anspruch 1, **dadurch gekennzeichnet, dass** die Hintertür (4) im C-Säulenbereich und im bodenseitigen Türrahmenbereich jeweils einen Hintertürverschluss (5a, 5b) mit einem Servoschlosshalter aufweist.

3. Kraftfahrzeug nach Anspruch 1, **dadurch gekennzeichnet, dass** der Vordertürverschluss (3) einen Servoschlosshalter und die Hintertür (4) im C-Säulenbereich und im bodenseitigen Türrahmenbereich als Servoschloss ausgebildete Hintertürverschlüsse (5a, 5b) aufweist.

4. Kraftfahrzeug nach Anspruch 1, **dadurch gekennzeichnet, dass** ein Hintertürverschluss (5a, 5b) einen Servoschlosshalter aufweist und ein Hintertürverschluss als Servoschloss ausgebildet ist.

5. Kraftfahrzeug nach einem der vorherigen Ansprüche, **dadurch gekennzeichnet, dass** der Vordertürverschluss (3) und/oder der Hinterverschluss (5a, 5b) mit einem linear verfahrbaren Servoschlosshalter ausgerüstet ist.

6. Kraftfahrzeug nach einem der Ansprüche 1 bis 4, **dadurch gekennzeichnet, dass** der Vordertürverschluss (3) und/oder der Hinterverschluss (5a, 5b) mit einem rotatorischen verfahrbaren Servoschlosshalter ausgerüstet ist.

## Claims

1. Motor vehicle with at least one front door (2) containing a front door lock (3) and a sliding door or pagoda door as rear door (4) with at least one rear door lock (5), in which the front door lock (3) cooperates with the rear door (4) without the need of a B-pillar between the front door (2) and the rear door (4) and in which the rear door lock (5a, 5b) cooperates with the door frame (6) for the rear door (4), **characterized in that** the front door lock (3) is designed as a servo lock with a closing aid for its catch and **in that** the rear door lock (5a, 5b) contains a servo lock striker with an adjustable catch bolt (8) or vice versa.

2. Motor vehicle according to claim 1, **characterized in that** the rear door (4) contains a rear door lock (5a, 5b) with a servo lock striker in the area of the C column and at floor level in the door frame area.

3. Motor vehicle according to claim 1, **characterized in that** the front door lock (3) contains a servo lock striker and that the rear door (4) in the area of the C column and at floor level in the door frame area contains rear door locks (5a, 5b) designed as a servo lock.

4. Motor vehicle according to claim 1, **characterized in that** the rear door lock (5a, 5b) contains a servo lock striker and that a rear door lock is designed as a servo lock.

5. Motor vehicle according to one of the above claims, **characterized in that** the front door lock (3) and/or the rear door lock (5a, 5B) contains a linearly displaceable servo lock striker.

6. Motor vehicle according to one of the claims 1 to 4, **characterized in that** the front door lock (3) and/or the rear door lock (5a, 5B) contains a rotationally displaceable servo lock striker.

## Revendications

1. Véhicule à moteur avec au moins une portière avant (2) avec une fermeture de portière avant (3) et une portière coulissante ou une portière pagode comme portière arrière (4) avec au moins une fermeture de portière arrière (5), la fermeture de portière avant (3) coopérant avec la portière arrière (4) en renonçant à la colonne B entre la portière avant (2) et la portière arrière (4) et la fermeture de portière arrière (5a, 5b) coopérant avec le châssis de portière (6) pour la portière arrière (4) **caractérisé en ce que** la fermeture de portière avant (3) est formée comme serrure assistée avec une aide de fermeture pour son pêne et que la fermeture de portière arrière (5a, 5b) présente une gâche portière assistée avec un boulon de fermeture (8) ou inversement.

2. Véhicule à moteur selon la revendication 1 **caractérisée en ce que** la portière arrière (4) dans la zone de la colonne C et dans la zone du châssis de portière côté sol présente respectivement une fermeture de portière arrière (5a, 5b) avec une gâche assistée.

3. Véhicule à moteur selon la revendication 1 **caractérisée en ce que** la fermeture de portière avant (3) présente une gâche portière assistée et la portière arrière (4) dans la zone de la colonne C et dans la zone du châssis de portière côté sol des fermetures de portière arrière (5a, 5b) formées comme gâche portière assistée.

4. Véhicule à moteur selon la revendication 1 **caractérisée en ce qu'**une fermeture de portière arrière (5a, 5b) présente une gâche portière assistée et qu'une fermeture de portière arrière est formée comme une gâche assistée.

5. Véhicule à moteur selon l'une des revendications précédentes **caractérisée en ce que** la fermeture de portière avant (3) et/ou la fermeture de portière arrière (5a, 5b) est équipée d'une gâche de portière assistée à déplacement linéaire.

6. Véhicule à moteur selon l'une des revendications précédentes **caractérisée en ce que** la fermeture de portière avant (3) et/ou la fermeture de portière arrière (5a, 5b) est équipée d'une gâche de portière assistée à déplacement à rotation.
